# EUROPEAN PATENT APPLICATION

(11) **EP 4 838 593 A1**
(43) Date of publication of application: **11.11.2026**
(21) Application number: 25175273.9
(22) Date of filing: 09.05.2025
(51) Int. Cl.: H01M 8/2475, H01M 8/0662

(54) **FUEL CELL STACK SKIN**

(71) Applicant: Airbus S.A.S., 31700 Blagnac (FR)
(72) Inventor: Bammer, Benedikt, 85521 Taufkirchen (DE); Hielscher, Daniel, 85521 Taufkirchen (DE)
(74) Representative: OTN Airbus SAS

(57) **Abstract**

The present invention relates to a fuel cell enclosure device.

In order to provide for an improved, safer and more efficient fuel cell, the fuel cell enclosure device (10), comprises at least one membrane element (12), providing a fluid-impermeable barrier. The at least one membrane element is configured for shielding a fuel cell stack (14) from external surroundings (16). The at least one membrane element is configured for retaining leaked process fluid of the fuel cell stack by its fluid-impermeable barrier. The at least one membrane element is configured for covering at least a part (18) of an external surface (19) of the fuel cell stack that is exposed to the external surroundings. The at least one membrane element is configured for elastically conforming its shape (20) to a profile (22) of a cross section of the at least one part of the external surface of the fuel cell stack.

## Description

### FIELD OF THE INVENTION

The present invention relates to a way of collecting leaked process fluids of a fuel cell, more specifically the invention relates to a fuel cell enclosure device, a fuel cell, an energy system, an energy facility and a method for providing a fuel cell enclosure device.

### BACKGROUND OF THE INVENTION

Fuel cells may supply electric energy with certain applications by converting the potential chemical energy of fluid substances, like process fluids. This conversion may take place within a fuel cell stack. Process fluid may leak at the fuel cell stack. In order to capture this leaked process fluid, the fuel cell stack may be housed in a shielding protection casing. However, conventional protection casings may not be compatible with certain type of fuel cell applications.

### SUMMARY OF THE INVENTION

There may thus be a need to provide for an improved, safer and more efficient fuel cell.

The object of the present invention is solved by the subject-matter of the independent claims; further embodiments are incorporated in the dependent claims. It should be noted that the following described aspects of the invention apply also for the fuel cell enclosure device, the fuel cell, the energy system, the energy facility and the method for providing the fuel cell enclosure device.

According to the present invention, a fuel cell enclosure device is provided. The fuel cell enclosure device comprises at least one membrane element, providing a fluid-impermeable barrier. The at least one membrane element is configured for shielding a fuel cell stack from external surroundings. The at least one membrane element is configured for retaining leaked process fluid of the fuel cell stack by its fluid-impermeable barrier. The at least one membrane element is configured for covering at least a part of an external surface of the fuel cell stack that is exposed to the external surroundings. The at least one membrane element is configured for elastically conforming its shape to a profile of a cross section of the at least one part of the external surface of the fuel cell stack.

As an effect, a predetermined sequence is prescribed in accordance with protection from an abrupt event of rapid energy conversion. First and at a primary stage, leaks are prevented, second and at a secondary stage, ignition sources are avoided and third and at a tertiary stage, the effects of ignition are mitigated. As an advantage, the fuel cell enclosure device does not jump directly to the tertiary stage, like conventional systems, which in the event of damage represents an increased risk for an abrupt event of rapid energy conversion of the system. As an advantage, a safer fuel cell enclosure device is provided. As an advantage, a lighter fuel cell enclosure device is provided. As an advantage, a lighter fuel cell enclosure device is provided. As an advantage, a more flexible fuel cell enclosure device is provided. As an advantage, a big, heavy and rigid protection casing for a fuel cell stack is omitted. As a further advantage, heavy and complex boxes made out of metal or composite are not needed as housing for a fuel cell stack. As advantage, heavy hard body constructions are omitted that increase the risk towards an abrupt event of rapid energy conversion of the fuel cell stack due to undesired behavior of leaked process fluid. As an advantage, there is no need to maintain or examine a confusing box for damages or tightness.

According to an example, a face of the at least one membrane element is configured for sealingly contacting a face of the at least one part of the external surface, such that gases of the external surroundings are displaced from an intermembrane interface comprised between the face of the at least one membrane element and the face of the at least one part of the external surface. The at least one membrane element is configured for capturing the leaked process fluid by reversibly expanding a sealed intermembrane space at the at least one part of the external surface.

According to an example, the at least one membrane element is configured for maintaining a pressure of the leaked process fluid within the fuel cell stack while providing flexibility with respect to volume changes of the covered fuel cell stack.

According to an example, the device further comprises a fluid collecting reservoir at the at least one membrane element. The fluid collecting reservoir is configured for gathering the leaked process fluid that is captured in the sealed intermembrane space.

According to an example, the at least one membrane element is tailored to the profile of the cross section of the at least one part of the external surface. At least one thicker reinforcing membrane portion is provided at areas of higher friction between the at least one membrane element and the at least one part of the external surface. At least one respective thinner membrane portion is provided at areas of respective lower friction between the at least one membrane element and the at least one part of the external surface.

According to the invention, also a fuel cell is provided. The fuel cell comprises at least one fuel cell stack and a fuel cell enclosure device according to one of the preceding examples. At least a part of an external surface of the at least one fuel cell stack is covered by the fuel cell enclosure device.

As an advantage, a lighter and more safe fuel cell results.

According to the invention, also an energy system is provided. The system comprises at least one fuel cell according to the previous example, at least one supply line, at least one load. The at least one fuel cell is connected to the at least one load by the at least one supply line. The at least one fuel cell supplies the at least one load with energy.

As an advantage, a lighter and more safe energy system results.

According to the invention, also an energy facility is provided. The facility comprises a structural framework, at least one energy system according to the previous example. The at least one energy system is supported by the structural framework and the at least one energy system supplies energy to operate the aircraft.

As an advantage, a lighter, efficient and more safe energy facility results. As an advantage, a lighter, efficient and more safe hydrogen-powered energy facility results. As an advantage, a lighter, efficient and more safe aircraft results. As an advantage, a lighter, efficient and more safe hydrogen-powered aircraft results. As an advantage a lighter and less complex construction of a structural framework can be applied at a building structure due to lower weight of the at least one energy system.

According to the invention, also a method for providing a fuel cell enclosure device is provided. The method comprises the following steps:
- Providing at least one membrane element, providing a fluid-impermeable barrier. The at least one membrane element is configured for shielding a fuel cell stack from external surroundings, wherein the at least one membrane element is configured for retaining leaked process fluid of the fuel cell stack by its fluid-impermeable barrier. The at least one membrane element is configured for covering at least a part of an external surface of the fuel cell stack that is exposed to the external surroundings and the at least one membrane element is configured for elastically conforming its shape to a profile of a cross section of the at least one part of the external surface of the fuel cell stack.

As an advantage, the process for applying and removing the fuel cell enclosure device is less costly.

According to an aspect, the idea is to cover the fuel cell stack in a flexible skin in order to reduce space around the stack and guarantee still an expansion of the stack in mainly longitudinal direction in operation. The skin shall protect against environmental impact/influence, such as water, salt, coldness, air ingress, lubricants, or even mechanical impacts, but also a sudden loss of pressure of the stack itself. The core idea is to get rid of heavy "hard body constructions" of the protection casing of fuel cells.

According to an aspect, a fuel cell stack is equipped with an additional protection film. The additional protection film provides the possibility to collect and locally concentrate leaking fluids from the fuel cell stack. This is achieved, while the additional protection film is partly separated from the fuel cell stack by a separation zone. The separation zone is flexible to a certain extent, such that it can take up leaking fluids from the fuel cell stack. The additional protection film is easily applicable and removable at the fuel cell stack and substitutes for rigid and heavy protection boxes. Further is also prevents a mixture of the leaking fluid with the surrounding gases contained in the protection box.

According to an aspect, a fuel cell stack skin is provided.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a fuel cell enclosure device.
Fig. 2 schematically shows another example of a fuel cell enclosure device.
Fig. 3 schematically shows an example of a fuel cell.
Fig. 4 schematically shows an example of an energy system.
Fig. 5 schematically shows an example of an energy facility.
Fig. 6 shows basic steps of an example of a method for providing a fuel cell enclosure device.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

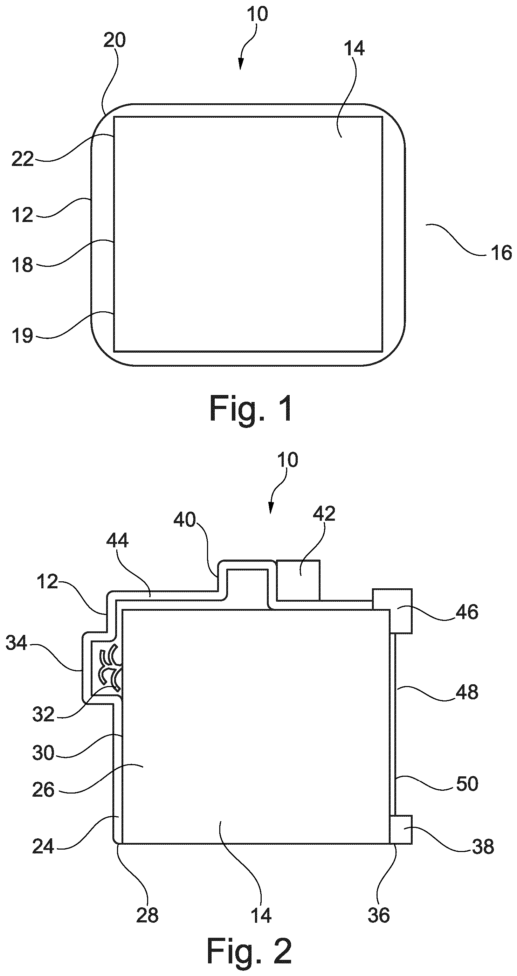

Fig. 1 schematically shows an example of a fuel cell enclosure device 10. The fuel cell enclosure device 10 comprises at least one membrane element 12, providing a fluid-impermeable barrier. The at least one membrane element 12 is configured for shielding a fuel cell stack 14 from external surroundings 16. The at least one membrane element 12 is configured for retaining leaked process fluid of the fuel cell stack 14 by its fluid-impermeable barrier. The at least one membrane element 12 is configured for covering at least a part 18 of an external surface 19 of the fuel cell stack 14 that is exposed to the external surroundings 16. The at least one membrane element 12 is configured for elastically conforming its shape 20 to a profile 22 of a cross section of the at least one part 18 of the external surface of the fuel cell stack 14.

The fuel cell enclosure device can also be referred to as enclosure, envelope, casing, sheath, overlay, coating, jacket, covering, wrap, mantle, container, skin or shell.

The term "fuel cell enclosure device" relates to an encapsulation or housing of a fuel cell stack 14 to prevent the escaping of process fluids of the fuel cell stack 14 into the environment and keep the process fluid isolated to other systems or the environment around.

The term "fuel cell stack" relates to an assembly of individual fuel cells designed to increase power output. It achieves this by connecting multiple fuel cells in series, thereby adding their individual voltages. Each cell within the stack facilitates electrochemical reactions between a fuel and an oxidant, producing electricity. Bipolar plates within the stack separate the cells and conduct electricity, while manifolds distribute the reactant gases. Seals are provided for preventing leaks, and end plates are provided for structural integrity. This stacked configuration enables fuel cell systems to power various applications, from vehicles to stationary power generation.

In an example, a fuel cell stack 14 comprises individual membrane electrode assemblies, MEA, sandwiched between bipolar plates, not shown in Fig. 1. The bipolar plates provide channels for reactant gas or cooling liquid distribution and conduct generated electricity. MEAs and bipolar plates are layered in a repeating sequence, forming the fuel cell stack 14. At the top end of the fuel cell stack 14, which is opposite of the main direction of gravity, a top end plate is provided, not shown in Fig. 1. At the bottom end of the fuel cell stack 14, a bottom end plate is provided. The bottom end plate lays opposite to the top end of the fuel cell stack 14. The fuel cell stack 14 is supplied with reactant gases and cooling liquid by a manifold integrated into the stack structure, e.g. at the bottom end plate. The entire stack can be compressed using fastening or tension elements, not shown in Fig. 1. The tension elements are tie rods, tie straps or other compression mechanisms to ensure proper contact and sealing between the layers and stability of the fuel cell stack 14. The entire shape 20 of a fuel cell stack 14 resembles a cuboid. The cuboid has a bottom face and a top face and four side faces.

In an example, the fuel cell stack 14 resembles a cylindrical form or any other curved structure.

The term "at least one membrane element" relates to a wall member having a wall thickness. The wall thickness restricts the transport of substances or forms of energy from the inner side to the outer side. The inner side being directed towards the fuel cell and the outer side being directed to the surroundings of the fuel cell. The wall member comprises an areal face that extends into two dimensions with the third dimension being the thickness also represented by the amount of material of the wall member, or the penetration depth or the direct diffusional path of gas molecules through the material of the wall member.

In an example, the at least one membrane element 12 is formed in the shape 20 of the cuboid of the fuel cell stack 14, as shown in Fig. 1.

In an example, the at least one membrane element 12 is formed in a cylindrical shape.

In an example, the at least one membrane element 12 is formed in a tube shape.

In an example, the at least one membrane element 12 is formed to adapt to the shape 20 of the cuboid of the fuel cell stack 14.

In an example, more than at least one membrane element 12 is provided, like for example, two, three, five, six or ten membrane elements.

In an example, the more than at least one membrane element 12, like five membrane elements are fused at their edges and corners to form the shape 20 of the cuboid of the fuel cell stack 14, wherein each of the like five membrane elements is representative for one distinctly oriented face from the bottom face or the top face and the four side faces.

In an example, at least one fuel cell stack 14 is provided and the at least one membrane element 12 covers at least a part 18 of an external surface of the at least one fuel cell stack 14, i.e. the the at least one membrane element 12 covers at least a part 18 of an external surface of one, two, three, four, five, ten or twenty fuel cell stack 14s.

The term "fluid-impermeable barrier" relates to the characteristic of a material that effectively blocks the flow of fluids. It describes the ability to resist against the diffusion or permeation of fluid molecules through the structure of the at least one membrane element 12.

In an example, the "fluid-impermeable barrier" is provided as "gas-impermeable barrier". The "gas-impermeable barrier" relates to the characteristic of a material that effectively blocks the flow of gases. It describes the ability to resist against the diffusion or permeation of gas molecules through the structure of the at least one membrane element 12.

The term "external surroundings" relates to the operation environment of the fuel cell stack 14, which can range from the environment at flight altitudes to the environment at the airport runway or the environment in a servicing hangar.

The term "process fluid" relates to fluid substances that are used in a fuel cell to generate electric energy. This comprises process fluids to be converted to electricity or process fluids in the form of a cooling liquid.

In an example, the process fluid comprises process gas.

In an example, the process fluid comprises reactant gas.

In an example, the process fluid comprises at least one of hydrogen, oxygen, water or a combination thereof.

In an example, the process fluid is a hydrocarbon.

In an example, the process fluid is methanol.

In an example, the process fluid comprises a cooling liquid of a fuel cell.

In an example, the process fluid is a cooling liquid of a fuel cell.

The term "external surface" relates to the interface between the fuel cell and its surrounding. The external surface is insulated from the internal body volume of the fuel cell, where the process fluids are converted. The external surface however can come into contact with process fluids through leaks that reach from the internal body volume of the fuel cell to the external surface.

The external surface of the fuel cell stack 14 can also be referred to as external surface.

In an example, the leak is a hole in an internal process fluid system of the fuel cell stack, that conducts process fluids to be converted to electricity or process fluids in the form of a cooling liquid.

In an example, the at least one membrane element 12 is independent from the functioning and the operation of the fuel cell stack 14, i.e. the at least one membrane element 12 can be omitted without any impact on the functioning of the fuel cell, as shown in Fig. 1.

In an example, the at least one membrane element 12 is configured for elastically conforming its shape to a profile 22 of a cross section of the external surface of the fuel cell stack 14, i.e. the at least one membrane element 12 covers the whole external surface of the fuel cell and conforms to the shape of the whole external surface of the fuel cell, i.e. it can be considered as an additional layer on the whole fuel cell stack 14.

In an example, the at least one membrane element 12 is configured to substitute for a protection casing of the fuel cell stack 14.

In an example, the at least one membrane element 12 is insulated from the functions, or the process fluid streams in the internal body volume of the fuel cell, as shown in Fig. 1.

In an example, the at least one membrane element 12 is unaffected by the force of the tensioning elements and insulated from the load path of the tensioning elements which compress the fuel cell stack 14.

The term "elastically conforming" relates to dynamic properties of the material of the at least one membrane element 12, that form-fits or contours the outer shape 20 of the fuel cell stack 14 while it matches and adjusts itself to the surface shape of the fuel cell. The at least one membrane element 12 is flexible and its material has the ability to stretch and adapt to the outer shape 20 of the fuel cell stack 14 to lower its potential tensional energy.

In an example, the surface shape of the fuel cell stack 14 comprises the edges and corners of the end plates, the bipolar plate, the MEAs and the manifold as well as the tension elements.

In an example, the at least one membrane element 12 is provided as flexible elastic tissue that can be deployed to cover external surface areas of the fuel cell stack 14.

The term "profile of a cross section" relates to an imaginary slice through the fuel cell and the resulting outline, as shown in Fig. 1.

Fig. 2 schematically shows another example of a fuel cell enclosure device 10. A face 24 of the at least one membrane element 12 is configured for sealingly contacting a face 26 of the at least one part 18 of the external surface, such that gases 28 of the external surroundings 16 are displaced from an intermembrane interface 30 comprised between the face 24 of the at least one membrane element 12 and the face 26 of the at least one part 18 of the external surface. The at least one membrane element 12 is configured for capturing the leaked process fluid 32 by reversibly expanding a sealed intermembrane space 34 at the at least one part 18 of the external surface.

The term "sealingly contacting" relates to the conditional state between the face 24 of the at least one membrane element 12 and the face of the external surface where an adherent or skin-tight fit between both faces is provided. The face 24 of the at least one membrane element 12 molds itself or conforms seamlessly to the face of the external surface.

The term "intermembrane interface" relates to a boarder region that is enclosed between the at least one membrane element 12 and the external surface of the fuel cell stack 14 and is hence insulated, or sealed, from the external surroundings 16. Further the intermembrane interface 30 bears a potential and expandable volume. The amount of the expandable volume is determined by the elasticity of the material of the at least one membrane element 12 and adjusted towards maintaining the gas pressure of a leaking fuel cell stack 14.

In an example, the sealed intermembrane space 34 is configured for preventing a mixing of the leaked process fluid 32 with gases 28 of the external surroundings 16, as shown in Fig. 2.

In an example, the gases 28 of the external surroundings 16 are fluids, which are displaced from the intermembrane interface 30.

In an example, the intermembrane interface 30 is filled with leaked process fluid 32 from the fuel cell stack 14 and the volume of the sealed intermembrane space 34 is defined by the amount of leaked process fluid 32, as shown in Fig. 2.

In an example, the filled expanded sealed intermembrane space 34 appears as bubble or projection at the surface of the at least one membrane element 12 and optically indicates leaked process fluid 32, as shown in Fig. 2.

In an example, the filled an expanded sealed intermembrane space 34 are mobile across the at least one membrane element 12, while the at least one membrane element 12 comprises a flexible material.

In an example, the face 24 of the at least one membrane element 12 and the face of the external surface are covered with a hydrophobic substance to prevent accumulation of condensed water in the intermembrane interface 30, not shown in Fig. 2.

As an effect, small bubbles inside the at least one membrane element could identify higher abnormal leakage. As an effect, space for accumulating gases around a fuel cell is reduced. As an effect, the probability of an abrupt event of rapid energy conversion is lowered. As an advantage, a safer fuel cell stack results. As an advantage, due to a tight cover around the fuel cell stack the space for leaked process fluid is minimized as well as the malfunctioning risk is mitigated due to missing of oxygen or air between fuel cell stack and the at least one membrane element. As a further advantage, due to a tight cover around the fuel cell stack, the space for leaked hydrogen gas is minimized. As an advantage, leaked process fluid is optically indicated by expanded sealed intermembrane space at the at least one membrane element. As a further advantage, a simpler maintenance and leakage check procedure results for the fuel cell stack.

In an example of Fig. 2, the at least one membrane element 12 is configured for maintaining a pressure of the leaked process fluid 32 within the fuel cell stack 14 while providing flexibility with respect to volume changes of the covered fuel cell stack 14.

The term "volume changes" relates to an expansion of the fuel cell stack 14 in mainly longitudinal direction in operation, not shown in Fig. 2.

In an example, internal pressure is maintained such that it is not reduced by a leakage in the external surface of the fuel cell stack 14 and/or flowing of the process fluid into sealed intermembrane space 34 without any resistance, as shown in Fig. 2. The resistance is provided by the elasticity of the material of the at least one membrane element 12 that allows the expansion of the sealed intermembrane space 34 to a certain extend that does not cause a drop of fluid pressure within the fuel cell stack 14.

In an example, the pressure of the leaked process fluid 32 is the same as the pressure of the process fluid contained within the fuel cell stack 14.

In an example, the at least one membrane element 12 comprises an elastic material.

In an example, the elastic material is at least one of thermoplastic or elastomeric polymer.

In an example, the elastic material comprises plasticizers that are resistant against a reducing atmosphere comprising hydrogen and reside in the elastic material, not shown in Fig. 2.

In an example, the at least one membrane element 12 comprises a composite material.

In an example, the at least one membrane element 12 comprises fiber material.

In an example, the at least one membrane element 12 comprises Kevlar.

In an example, the at least one membrane element 12 comprises natural latex or other natural rubbers.

In an example, the elasticity of the at least one membrane element 12 is configured for dampening mechanical impacts at the external surface.

As an advantage, the at least one membrane elements stand with the over pressure blast wave during leakage of process fluid due to its flexibility. As an advantage, operation of the fuel cell stack under leakage is provided. As an advantage, a cheaper fuel cell enclosure device is provided.

In an example of Fig. 2, the at least one membrane element 12 is formed for generating a holding force at the fuel cell stack 14 by elastically conforming to the profile 22 of the cross section of the external surface of the fuel cell stack 14.

In an example, the at least one membrane element 12 is formed to encompass a fuel cell stack 14, i.e. the external surface of the fuel cell stack 14. As the circumference of the at least one membrane element 12 is slightly smaller than the circumference of the fuel cell stack 14, the at least one membrane element 12 is stretched at the fuel cell stack 14. Due to the stretching a compression force, or holding force is generated that keeps the at least one membrane element 12 attached to the fuel cell stack 14.

In an example, the at least one membrane element 12 is formed in a bag shape with a tubular form having an insertion opening and a bottom part, as shown in Fig. 2. The at least one membrane element 12 is pulled over the fuel cell stack 14 starting from the top end plate with the insertion opening, i.e. the fuel cell is put in the insertion opening of the bag shape. It is further pulled over the fuel cell stack 14 until the bottom end plate is reached by the bottom part of the bag shape. The at least one membrane element 12 is held at the fuel cell stack 14 by the bottom part of the bag shape at the top end plate and the gravitational forces.

As an advantage, a simple handling, mounting and unmounting of the fuel cell enclosure device is provided.

In an example of Fig. 2, the at least one membrane element 12 comprises an interface area 36 configured for providing supply 38 to the fuel cell stack 14 through the at least one membrane element 12.

The term "interface area" relates to a region that is formed at the at least one membrane element 12 and that serves as a connection site for the fuel cell stack 14 to fluid supply of process fluids and to electrical supply lines.

In an example, the interface area 36 is provided as cutouts through the at least one membrane element 12.

In an example, the interface area 36 is formed such that it prevents expelling of enclosed fluids from the sealed intermembrane space 34.

In an example, the enclosure device is provided in a bag shape and the interface area 36 is provided as the insertion opening, as shown in Fig. 2.

As an advantage, leaked process fluid does not escape at the interface area of the fuel cell enclosure device. As an advantage, supply to an enclosed fuel cell stack is simplified. As an advantage, a flexible interface area towards a fuel cell stack is provided.

In an example of Fig. 2, the device further comprises a fluid collecting reservoir 40 at the at least one membrane element 12. The fluid collecting reservoir 40 is configured for gathering the leaked process fluid 32 that is captured in the sealed intermembrane space 34.

The term "fluid collecting reservoir" relates to an empty volume of the at least one membrane element 12 at a central point of the at least one membrane element 12 that is intended to accumulate leaked process fluid 32 from separate and distinctly located leakage sites distributed all over the external surface of the fuel cell stack 14, i.e. the intermembrane interface 30.

In an example, the fluid collecting reservoir is provided as gas collecting reservoir.

In an example, the fluid collecting reservoir 40 is formed from the material of the at least one membrane element 12, as shown in Fig. 2.

In an example, the fluid collecting reservoir 40 is formed as a hemisphere or bubble with access to the intermembrane interface 30, as shown in Fig. 2.

In an example, the apex of the hemisphere or bubble with access to the intermembrane interface 30 is located at the highest point of the fuel cell stack 14 in opposite direction to gravity, as shown in Fig. 2.

In an example, the fluid collecting reservoir 40 is formed as an expandable bubble and serves as a leakage sensor, i.e, process fluid leakage sensor. In an unexpanded state the expandable bubble is relaxed and empty. An expansion of the expandable bubble due to incoming process fluid indicates the presence of the leaked process fluid 32, as shown in Fig. 2.

In an example, the fluid collecting reservoir 40 is provided by a bend or a curved shape of the at least one membrane element 12, where the apex of the bend or curved shape points in opposite direction of gravity.

In an example, the fluid collecting reservoir 40 in a bend or curved shape is located at the top end plate of the fuel cell stack 14 and the apex of the bend or curved shape points in opposite direction of gravity.

In an example, the apex of the bend or curved shape is formed by a curved shape of the top end plate of the fuel cell stack 14.

In an example, the fluid collecting reservoir 40 is located at the highest point of the at least one membrane element 12 at the top end plate of the fuel cell stack 14 and gravitational forces guide and drag the leaked process fluid 32 from the whole external surface of the fuel cell stack 14, i.e. the intermembrane interface 30, towards the fluid collecting reservoir, as shown in Fig. 2.

In an example, the fluid collecting reservoir 40 is provided by a face 24 of the at least one membrane element 12 that has the least resistance towards expansion through process fluid, while it is arranged to experience the least strain forces.

In an example, one fluid collecting reservoir 40 for oxygen and one fluid collecting reservoir 40 for hydrogen is provided.

In an example, the fluid collecting reservoir 40 has a connection in order to resupply the fluid to the fuel cell stack 14 or to safely dilute it in the surroundings.

In an example, the fluid collecting reservoir 40 comprises a material that consumes the process fluid, not shown in Fig. 2.

In an example, the fluid collecting reservoir 40 can be attached and detached from the at least one membrane element 12.

As an advantage, a better monitoring of the amount of leaked process fluid is provided.

In an example of Fig. 2, the device further comprises at least one process fluid leakage sensor 42.

In an option of Fig. 2 and preferably, the process fluid leakage sensor is located at the fluid collecting reservoir, as shown in Fig. 2.

The term "process fluid leakage sensor" relates to a unity that changes its state upon contact with process fluid.

In an example, the process fluid leakage sensor is provided as process gas leakage sensor.

In an example, the process fluid leakage sensor is provided by the at least one membrane itself showing the presence of leaked process fluid 32 by expansion.

In an example, the process fluid leakage sensor provides an electronic signal upon contact with process fluid.

In an example, the process fluid leakage sensor changes its measurable properties upon contact with process fluid.

In an example, the process fluid leakage sensor chemically reacts with process fluid.

In an example, the process fluid leakage sensor is a hydrogen sensor.

In an example, the process fluid leakage sensor is an oxygen sensor.

In an example, the process fluid leakage sensor is a water sensor.

In an example, the process fluid leakage sensor is a cooling liquid sensor.

In an example, the process fluid leakage sensor is a strain and/or pressure sensor.

In an example, the process fluid leakage sensor is located at any position of the at least one membrane element 12 or the fuel cell stack 14.

As an effect, the process fluid leakage sensor is located at a site with higher process fluid concentration. As an effect, the at least one membrane element provides a better and denser accumulation of process fluids for the process fluid leakage sensor. As an advantage, more accurate and precise sensing of leaked process fluid at a fuel cell stack 14 is enabled.

In an example of Fig. 2, the at least one membrane element 12 further comprises at least one fluid guiding element 44 that is formed for conducting the leaked process fluid 32 from the sealed intermembrane space 34 to the fluid collecting reservoir.

The fluid guiding element 44 can also be referred to as channel or passage.

In an example, the fluid guiding element 44 is provided as a gas guiding element.

The term "fluid guiding element" relates to shapes of the at least one membrane element 12 that alleviates and directs the transport of process fluids from the sealed intermembrane space 34 to the fluid collecting reservoir.

In an example, the at least one fluid guiding element 44 is provided as channels or other projections that form passages in the intermembrane interface 30 from the sealed intermembrane space 34 to the fluid collecting reservoir, as shown in Fig. 2.

In an example, the at least one fluid guiding element 44 is provided by ribs, bumps or other protrusions in the intermembrane space.

In an example, the at least one membrane element 12 is shaped such that an intermembrane interface 30 is provided between the corners and edges of the fuel cell stack 14 and the respective inner edges or inner corners of the at least one membrane of the fuel cell enclosure device 10 that resembles a channel, i.e. at least one fluid guiding element, to guide leaked process fluid 32 between the side faces of the fuel cell and top and/or the bottom end plate or vice versa.

In an example, edges of the at least one membrane element 12 or corners that are conformed to the profile 22 of the cross section of the external surface of the fuel cell stack 14 are specifically formed fluid guiding elements.

In an example, the at least one membrane element 12 is configured such that a coupling of a load path in the at least one membrane element 12 and a load path within the FC stack is minimized to reduce friction between the at least one membrane element 12 and the FC stack.

As an advantage, a better collection and accumulation of leaked process fluid in the fluid collecting reservoir results. As an advantage, while a better collection of process fluids results a lighter fuel cell stack design is enabled with lighter tightening and thinner components.

In an example of Fig. 2, the at least one membrane element 12 is tailored to the profile 22 of the cross section of the at least one part 18 of the external surface. At least one thicker reinforcing membrane portion 46 is provided at areas of higher friction between the at least one membrane element 12 and the at least one part 18 of the external surface. At least one respective thinner membrane portion 48 is provided at areas of respective lower friction between the at least one membrane element 12 and the at least one part 18 of the external surface.

Tailored can also be referred to as adjusting the at least one membrane element 12 to the properties of the external surface of the fuel cell.

The term "thicker" means thicker in relation to the term "thinner" meaning a higher wall strength and thinner a lower wall strength, meaning thicker and more material than thinner and less material, which basically implies a gradient of material thickness across the at least one membrane element 12.

The term "thicker reinforcing membrane portion" relates to the strength of the wall material of an area of the at least one membrane element 12, which can be thicker than a respective thinner portion of the at least one membrane element 12 having a less strong wall material.

In an example, the thicker reinforcing membrane portion 46 has a higher penetration depth than the respective thinner membrane portion 48 and a longer diffusional path for contained process fluids in the intermembrane interface 30.

The term "thinner membrane portion" relates to an area of the at least one membrane element 12 with less material and hence with a weaker wall strength or smaller wall thickness.

In an example, the edges and corners of the profile 22 of the cross section of the external surface of the fuel cell stack 14 are the areas of higher friction.

In an example, the profile 22 of the cross section of the external surface of the fuel cell stack 14 that is representative of the center of the side faces of the fuel cell stack 14, are the areas of lower friction.

In an example, the location of tie rods or tensions straps, not shown in Fig. 2, are the areas of higher friction.

In an example, the thicker reinforcing membrane portion 46 protects the at least one membrane element 12 from friction induced fractures in the at least one membrane element 12.

As an advantage, an agreement between robustness and weight can be optimized.

In an example of Fig. 2, the at least one membrane element 12 comprises a metallic layer 50 for thermally insulating the fuel cell stack 14 from the external surroundings 16.

In an example, the metallic layer 50 is a reflective layer for electromagnetic radiation and hence enables a better thermal insulation of the fuel cell stack 14.

In an example, the metallic layer 50 is configured for reacting with process fluids of the fuel cell stack 14 to scavenge the process fluids in the sealed intermembrane space 34.

In an example, the metallic layer 50 is configured for reacting with hydrogen, , not shown in Fig. 2.

As an advantage, changes of the metallic layer 50 are indicative for the leaked process fluids. As an advantage, thermal management of the fuel cell stack 14 is alleviated.

In an example of Fig. 2, the at least one membrane element 12 comprises at least one flame retarding substance that is configured for undergoing a change of state upon contact with an ignition source. The change of state is configured for quenching the ignition source.

The term "flame retarding substance" relates to a material of the at least one membrane element 12 that changes its structure upon contact with heat. The change of structure diminishes the heat, i.e. extinguishes a flame.

The term "change of state" relates to a structural change of the at least one flame retarding substance.

The term "quenching" relates to mitigating, erasing or extinguishing.

In an example, the at least one flame retarding substance causes the evolution of a foamed structure of the at least one membrane element 12 in contact to a flame, which extinguishes the flame, not shown in Fig. 2.

In an example, the ignition source is a hydrogen flame, not shown in Fig. 2.

As an advantage, a self-extinguishing fuel cell enclosure device is provided.

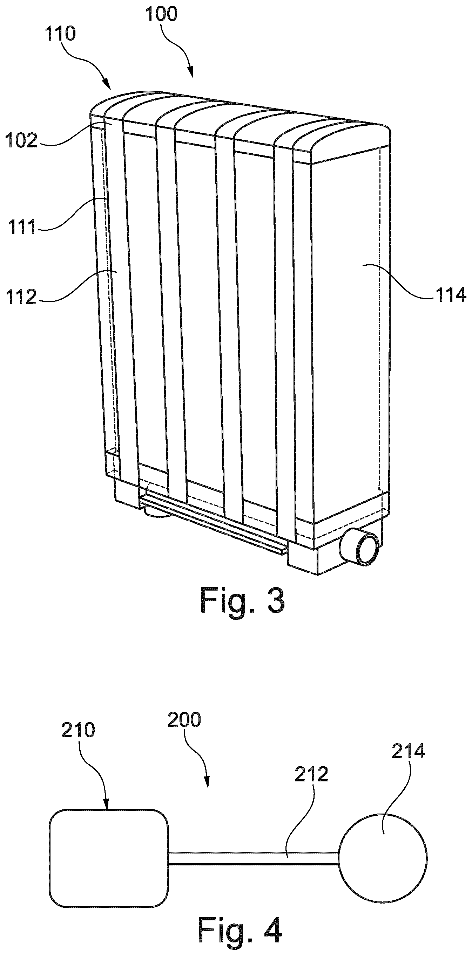

Fig. 3 schematically shows an example of a fuel cell 100. The fuel cell 100, comprises at least one fuel cell stack 102 and a fuel cell enclosure device 110 according to one of the preceding examples. At least a part 111 of an external surface 112 of the at least one fuel cell stack 102 is covered by the fuel cell enclosure device 110.

Fig. 4 schematically shows an example of an energy system. The energy system 200 comprises at least one fuel cell 210 according to previous example, at least one supply line 212 and at least one load 214. The at least one fuel cell 210 is connected to the at least one load 214 by the at least one supply line 212. The at least one fuel cell 210 supplies the at least one load 214 with energy.

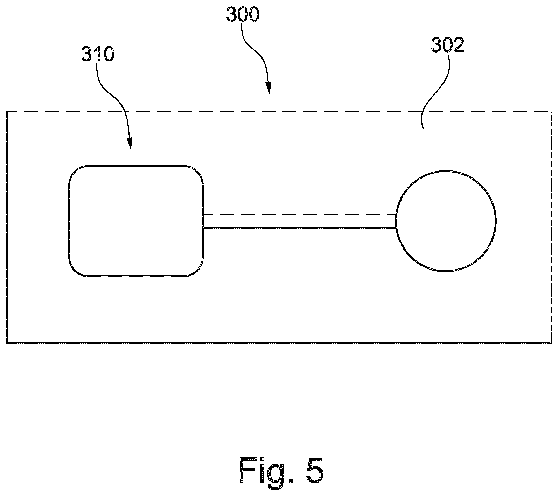

Fig. 5 schematically shows an example of an energy facility 300. The energy facility 300 comprises a structural framework 302 and at least one energy system 310 according to the previous example. The at least one energy system 300 is supported by the structural framework 302 and the at least one energy system 310 supplies energy to operate the aircraft.

In an example, the energy facility is a vehicle.

In an example, the energy facility is a car.

In an example, the energy facility is a means of public transport.

In an example, the energy facility is an aircraft.

In an example, the energy facility is a train.

In an example, the energy facility is a building.

In an example, the structural framework is a vehicle frame.

In an example, the structural framework is an airframe.

In an example, the structural framework is framework of a building.

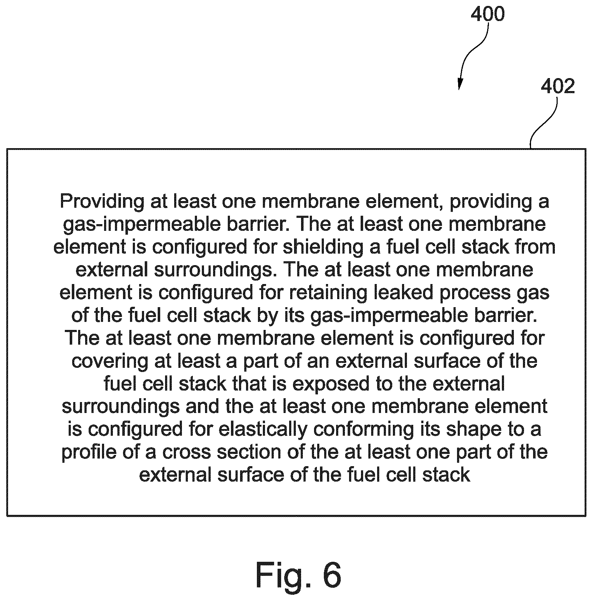

Fig. 6 shows basic steps of an example of a method 400 for providing a fuel cell enclosure device. The method 400 comprises the following step:
- In a first step 402 at least one membrane element is provided, providing a fluid-impermeable barrier. The at least one membrane element is configured for shielding a fuel cell stack from external surroundings. The at least one membrane element is configured for retaining leaked process fluid of the fuel cell stack by its fluid-impermeable barrier. The at least one membrane element is configured for covering at least a part of an external surface of the fuel cell stack that is exposed to the external surroundings and the at least one membrane element is configured for elastically conforming its shape to a profile of a cross section of the at least one part of the external surface of the fuel cell stack.

In an example, the removal of the fuel cell enclosure device comprises pulling the at least one membrane element away from the fuel cell stack or cutting the at least one membrane element to expose the external surface of the fuel cell stack.

In an example, existing fuel cell stacks are retrofitted with the fuel cell enclosure device.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A fuel cell enclosure device (10), comprising:
- at least one membrane element (12), providing a fluid-impermeable barrier;
wherein the at least one membrane element is configured for shielding a fuel cell stack (14) from external surroundings (16);
wherein the at least one membrane element is configured for retaining leaked process fluid of the fuel cell stack by its fluid-impermeable barrier;
wherein the at least one membrane element is configured for covering at least a part (18) of an external surface (19) of the fuel cell stack that is exposed to the external surroundings; and
wherein the at least one membrane element is configured for elastically conforming its shape (20) to a profile (22) of a cross section of the at least one part of the external surface of the fuel cell stack.

2. Device according to claim 1, wherein a face (24) of the at least one membrane element is configured for sealingly contacting a face (26) of the at least one part of the external surface, such that gases (28) of the external surroundings are displaced from an intermembrane interface (30) comprised between the face of the at least one membrane element and the face of the at least one part of the external surface; and
wherein the at least one membrane element is configured for capturing the leaked process fluid (32) by reversibly expanding a sealed intermembrane space (34) at the at least one part of the external surface.

3. Device according to claim 1 or 2, wherein the at least one membrane element is configured for maintaining a pressure of the leaked process fluid within the fuel cell stack while providing flexibility with respect to volume changes of the covered fuel cell stack.

4. Device according to claim 1, 2 or 3, wherein the at least one membrane element is formed for generating a holding force at the fuel cell stack by elastically conforming to the profile of the cross section of the external surface of the fuel cell stack.

5. Device according to one of the preceding claims, wherein the at least one membrane element comprises an interface area (36) configured for providing supply (38) to the fuel cell stack through the at least one membrane element.

6. Device according to one of the preceding claims, further comprising a fluid collecting reservoir (40) at the at least one membrane element;
wherein the fluid collecting reservoir is configured for gathering the leaked process fluid that is captured in the sealed intermembrane space.

7. Device according to one of the preceding claims, wherein the device further comprises at least one process fluid leakage sensor (42); and
wherein the process fluid leakage sensor is located at the fluid collecting reservoir.

8. Device according to claim 6 or 7, wherein the at least one membrane element further comprises at least one fluid guiding element (44) that is formed for conducting the leaked process fluid from the sealed intermembrane space to the fluid collecting reservoir.

9. Device according to one of the preceding claims, wherein the at least one membrane element is tailored to the profile of the cross section of the at least one part of the external surface;
wherein at least one thicker reinforcing membrane portion (46) is provided at areas of higher friction between the at least one membrane element and the at least one part of the external surface; and
wherein at least one respective thinner membrane portion (48) is provided at areas of respective lower friction between the at least one membrane element and the at least one part of the external surface.

10. Device according to one of the preceding claims, wherein the at least one membrane element comprises a metallic layer (50) for thermally insulating the fuel cell stack from the external surroundings.

11. Device according to one of the preceding claims, wherein the at least one membrane element comprises at least one flame retarding substance that is configured for undergoing a change of state upon contact with an ignition source; and
wherein the change of state is configured for quenching the ignition source.

12. A fuel cell (100), comprising:
- at least one fuel cell stack (102); and
- a fuel cell enclosure device (110) according to one of the preceding claims;
wherein at least a part (111) of an external surface (112) of the at least one fuel cell stack is covered by the fuel cell enclosure device.

13. An energy system (200), comprising:
- at least one fuel cell (210) according to claim 12;
- at least one supply line (212); and
- at least one load (214);
wherein the at least one fuel cell is connected to the at least one load by the at least one supply line; and
wherein the at least one fuel cell supplies the at least one load with energy.

14. An energy facility (300), comprising:
- a structural framework (302); and
- at least one energy system (310) according to claim 13;
wherein the at least one energy system is supported by the structural framework; and
wherein the at least one energy system supplies energy to operate the aircraft.

15. A method (400) for providing a fuel cell enclosure device, comprising the following steps:
- Providing (402) at least one membrane element, providing a fluid-impermeable barrier, wherein the at least one membrane element is configured for shielding a fuel cell stack from external surroundings, wherein the at least one membrane element is configured for retaining leaked process fluid of the fuel cell stack by its fluid-impermeable barrier, wherein the at least one membrane element is configured for covering at least a part of an external surface of the fuel cell stack that is exposed to the external surroundings and wherein the at least one membrane element is configured for elastically conforming its shape to a profile of a cross section of the at least one part of the external surface of the fuel cell stack.
